# EUROPEAN PATENT SPECIFICATION

(11) **EP 3 916 278 B1**
(45) Date of publication and mention of the grant of the patent: **03.01.2024**
(21) Application number: 21176077.2
(22) Date of filing: 26.05.2021
(51) Int. Cl.: F16K 31/05, F16K 31/06, F16K 31/524

(54) **EMERGENCY MANUAL DRIVE SYSTEM FOR LINEAR SLIDING VALVES**
NOT-MANUELLES ANTRIEBSSYSTEM FÜR LINEARE SCHIEBVENTILE
SYSTÈME D'ENTRAÎNEMENT MANUEL D'URGENCE POUR VANNES COULISSANTES LINÉAIRES

(30) Priority: 26.05.2020 IT 202000012457
(43) Date of publication of application: 01.12.2021
(73) Proprietor: Walvoil S.p.A., 42124 Reggio Emilia (IT)
(72) Inventor: ALLEGRETTI, Mirco, 42124 REGGIO EMILIA (RE) (IT)
(74) Representative: Fanzini, Valeriano

(56) References cited:
- EP-A1- 3 284 956
- WO-A1-2014/036388
- JP-A- S60 164 003
- US-A- 3 756 282
- US-A- 3 994 473

## Description

The present invention relates to an emergency manual drive system for linear sliding valves and is preferred for use in hydraulic valves whose sliding members are actuated by means of an actuator, generally of the electromagnetic type.

These valves are widely used on operating and/or agricultural machinery.

More specifically, the invention relates to a valve according to claim 1, which can be used singly or in combination with the electrical controls used in the hydraulic valves to handle the sliding members linearly, in order to ensure that the sliding member can be actuated either purely manually or in the event of a failure of the electrical actuator, where this is provided for the operation of the valve.

A common problem with today's electrically actuated hydraulic valves is the difficulty of manual actuation of the sliding member in a continuous manner in case of reduced or absent operation of the electric actuators that control the actuation thereof.

Typically, these valves are provided with one or more electromagnetic linear actuators, generally in pairs and axially opposed, whose movable core generally acts by means of a pusher on the sliding member.

Said electric actuators are provided with special members delegated to the manual actuation in provisional mode, which comprise an appendage mounted slidably in an axial seat and active on the movable core to translate it to and from an operative position of actuation of the valve when the electromagnetic actuator is not in a condition to do so. The displacement of the appendage can be carried out by means of a mechanical rod-shaped control that allows blocking the return of the appendage into the seat of the plug for example, by screwing in order to keep the movable core in the operative position of the valve preventing the return thereof.

When the sliding member of the valve is held in a balanced return position by a pair of springs acting on the axially opposed ends of the same, the mechanical control prevents the sliding member from returning to the balanced position.

An example of such devices is disclosed in US 3 756 282 A disclosing a manual override assembly including a handle connected to a pivot shaft which includes a lever arm having a ball at its outer end. The handle is normally locked by a pin in a fixed position so that it will also hold the manual override in a fixed position. On movement of the lever a corresponding movement will be transferred to the manual override producing a corresponding change in the position of the control section.

A major limitation of this drive system is evident in applications where the areas between the electromagnetic actuators and the sliding member are pressurised to operating pressure. In fact, the fluid-dynamic seal between the appendage and the seat is generally delegated to a conical or other type shutter at the end of the appendage facing towards the core, which abuts on the corresponding end of the seat. This seal is integrated by a possible (O-ring) gasket between the appendage and the seat. However, when the appendage is used for the emergency control of the core in place of the electric drive, the seal between the conical shutter and the stop on the seat is lost and the only remaining sealing function is delegated to the gasket alone, which, in the case of significant pressure, risks being damaged or even ejected from the seat. This leads to possible leaks in the hydraulic system and valve malfunction.

Having said that, the technical problem addressed by the present invention is to make available an emergency manual drive system for linear sliding valves which is structurally and functionally designed in such a way as to allow overcoming, at least in part, one or more of the technical drawbacks complained of with reference to the above-mentioned prior art. In particular, one of the problems addressed by the invention is to prevent the effects of an alteration of the normal actuation of the valve from propagating beyond the actuator of that actuation, for example to the emergency control appendage and to the relevant gaskets.

A further object of the invention is to make available a hydraulic valve which can be particularly versatile in use while maintaining an overall simple structure.

This problem is solved and this object is achieved by the invention by means of a linear sliding valve with secondary actuation made in accordance with one or more of the appended claims.

The characteristics and advantages of the invention will become clearer from the detailed description of an embodiment illustrated, by way of non-limiting example, with reference to the appended drawings wherein:
- figure 1 is a sectional view of the linear sliding valve;
- figure 2 is a sectional view of the linear sliding valve with translated sliding member; and
- figure 3 is a perspective view of the linear sliding valve.

In the figures, 100 is collectively referred to as the hydraulic linear sliding valve with secondary actuation made in accordance with a preferred embodiment of the present invention. The linear sliding valve is advantageously a hydraulic spool distributor that allows the distribution of operating fluid, e.g. pressurised oil, to the connected utilities.

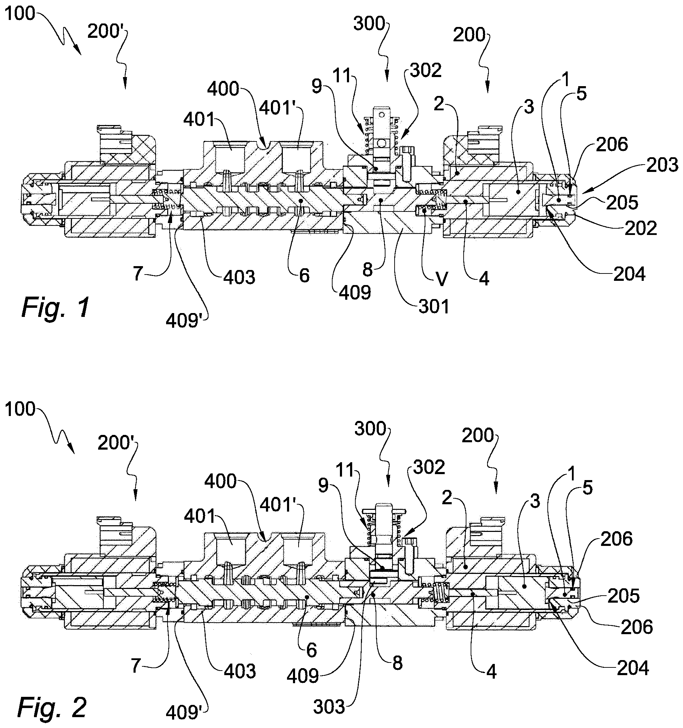

As can be observed from Figure 1, the linear sliding valve 100 with secondary actuation, which may be actuated in an emergency situation, of the present invention comprises a valve body 400 including at least one inlet and at least one outlet 401, 401'.

A sliding member 6 is provided within the valve body 400 to allow or prevent the passage of a fluid operating in inlet and outlet.

The valve 100 further comprises a primary actuator 200 for the standard actuation of the sliding member 6 in the valve body 400 and a secondary actuator 300 for the secondary, or emergency, actuation of the sliding member 6.

Preferably, the secondary actuator 300 is interposed between the valve body 400 and the primary actuator 200.

The normal actuation occurs in a condition in which the primary actuator 200 is operating correctly; the secondary actuation may occur in a condition in which the primary actuator 200 is malfunctioning and, for this reason, it is also referred to as emergency actuation.

Preferably, the valve body 400 has a cylindrical shape inside which a longitudinal hole 403 is obtained which is connected to the inlet and outlet 401, 401'. In the illustrated embodiment a single inlet and a single outlet 401, 401' are represented. In other embodiments not illustrated, there may be multiple inlets and/or outlets.

The sliding member 6 advantageously slides in the longitudinal hole 403 to allow or prevent the passage of a fluid operating in inlet and outlet 401, 401'. Preferably the sliding member 6 is a cylindrical slider with a variable cross-section. Advantageously, the wider sections of the sliding member 6 are adapted to prevent the passage of operating fluid while the narrower sections allow the passage of such fluid.

The primary actuator 200 is preferably combined with a side surface 409, 409' of the valve body 400. Advantageously, there is a pair of axially opposed primary actuators 200, 200'.

In some embodiments, such as the one illustrated, the linear sliding valve 100 comprises in fact two primary actuators 200, 200'. In such a case, the secondary actuator 300 is adapted to be interposed between the valve body 400 and the first primary actuator 200 or between the valve body 400 and a second primary actuator 200'. This feature highlights a flexibility in the use of the secondary actuator 300 with respect to the linear sliding valve 100.

However, it will be appreciated that there may also be two secondary actuators 300, one interposed between the valve body 400 and the first primary actuator 200 and the other one between the valve body 400 and a second primary actuator 200'.

In a preferred embodiment, the primary actuator 200 is of the electromagnetic type and comprises a coil 2, a movable core 3 and a pusher 4. The coil 2 is adapted to supply the movable core 3 connected to pusher 4. Under the action of the movable core, the pusher 4 presses on the sliding member 6 to handle it from a resting position to an operative position of the valve 100.

Preferably, a spring member 7, in contact with the sliding member 6 and positioned on the opposite side with respect to the primary actuator 200, is adapted to return the sliding member 6 to its resting position, once the action of the primary actuator 200 has ended.

Advantageously, the main actuator 200 comprises a closing member 202, positioned on the opposite side with respect to the valve body 400 and provided with a hole 203 within which an appendage 1 is inserted, wherein said appendage 1 includes a conical shutter 204 and a shank 205 on which a gasket 5 is mounted. The fluid-dynamic seal between appendage 1 and hole 203 is preferably provided mainly by the conical shutter 204 and to a lesser extent by the gasket 5. The gasket 5 can advantageously be an O-ring. The closing member 202 is preferably fixed to the primary actuator 200. In a further aspect, there is also a ring nut 206 which fixes the coil 2.

As can be observed from Figure 1, in preferred embodiments the secondary actuator 300 comprises a secondary actuator body 301 inside which an axial member 8 slides. Preferably, the axial member 8 is slidably driven in the secondary actuator body 301 and is interposed between the sliding member 6 and the primary actuator 200, to transmit the action exerted by the primary actuator 200 to the sliding member 6. According to an aspect of the invention, the secondary actuator 300 comprises a mechanical actuation 302, accessible from the outside of the secondary actuator body 301, to translate the axial member 8 to and from an actuation position of the sliding member 6 independently of the actuation of the primary actuator 200.

The axial member 8 is preferably cylindrical in shape. The axial member 8, which is interposed between the primary actuator 200 and the sliding member 6, enables the action exerted by the primary actuator 200 to be transmitted to the sliding member 6. In particular, the pusher 4 is pressed against the axial member 8 which in turn pushes the sliding member 6. Advantageously, the axial member 8 has an axial opening adapted to receive a protuberance of the sliding member 6, so as to facilitate the coupling thereof.

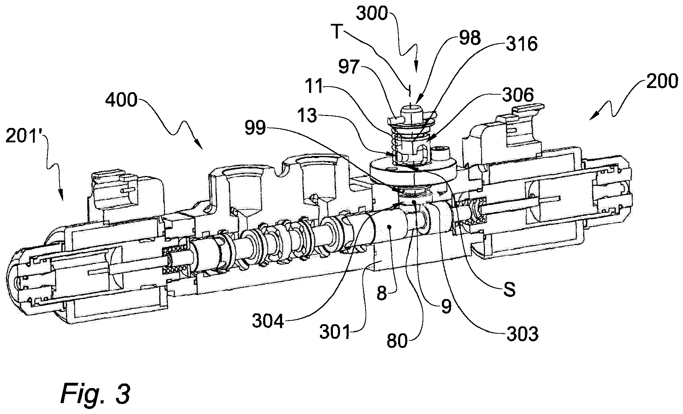

Preferably, the mechanical actuation 302 comprises a cam 303, or other movable body, as will be seen below, and a motion conversion mechanism 304, better visible in figure 3, interposed between the cam 303 and the axial member 8, to convert the rotational motion of said cam 303 into a translational motion of the axial member 8.

More generally, motion conversion mechanism 304 allows to convert a rotational movement of the cam 303 about an axis T oriented according to a substantially radial direction with respect to the axial member into a movement of the axial member itself along its axial direction.

In a preferred embodiment, the axial member 8 comprises a recess 80, preferably in the shape of a narrow cross-sectional area configured to receive the cam 303. Preferably, said cam 303 by rotating will press on a surface of said tapered area 80 pushing the axial member in the direction of the sliding member 6.

As an alternative to the cam 303, the use of a shaped movable body comprising an inclined surface configured to interact with the motion conversion mechanism may also be provided. Such an inclined surface may, for example, abut a corresponding surface of the recess 80, such that the translation motion of the inclined surface in a transversal direction to the axial member 8, preferably corresponding to an axis oriented according to a substantially radial direction with respect to the axial member 8, is converted into the translation motion of the axial member 8.

Still in another alternative, it may be envisaged that the actuation comprises a magnetic or electromagnetic handling mechanism for the translation of said axial member 8.

Referring again to the figures, advantageously, the mechanical actuation 302 comprises a transversal member 9, passing through said secondary actuator body 301. Preferably, the transversal member 9 comprises an inner end 99 with respect to the secondary actuator body 301 onto which the cam 303 is mounted. In some embodiments, which are better illustrated in the example of Figure 3, the transversal member 9 comprises an outer end 98 with respect to the secondary actuator body 301 including a rotation control 97, configured to put the transversal member 9 and consequently the cam 303, into rotation. This rotation control can be, for example, a handle, a lever, a knob, a solenoid, etc.

Preferably, the transversal member 9 develops according to the axis T oriented according to a substantially radial direction with respect to the axial member 8.

According to a preferred embodiment, the secondary actuator comprises an elastic return 11 adapted to bring the transversal member 9 and consequently the axial member 8 from an actuation position of the sliding member 6 back to a resting position. Preferably, the elastic return 11 is interposed between the secondary actuator body 301 and a shoulder obtained on the outer end 98 of the secondary actuator body 301. Advantageously, the elastic return 11 is a helical spring positioned about the transversal member 9.

According to a further aspect, the secondary actuator 300 comprises a mechanical restraint member 306 adapted to keep the axial member 8 towards an actuation position of the sliding member 6. In a preferred embodiment, the mechanical restraint member 306 comprises a hollow cylindrical body 316, inside which the transversal member 9 is positioned so that it is able to translate and rotate, and a groove S adapted to obtain a pin 13 formed on the transversal member 9, so that the pin 13 is able to slide and engage with the groove S. The groove S is advantageously configured so as to comprise a tapered part, which allows the pin 13 to slide by rotating, and a part elongated in a vertical direction, in which the pin can translate upwards, thanks to the thrust of the elastic return 11, and engage with the groove S to keep itself in a fixed position.

In an advantageous embodiment, the primary actuator 200 comprises a primary actuator body 201, preferably of substantially cylindrical shape. Advantageously, the primary actuator body 201, the secondary actuator body 301 and the valve body 400 are arranged coaxially aligned.

The invention thus solves the proposed problem, while at the same time achieving a plurality of advantages, making it possible in particular to ensure an actuation of the sliding member even in the event of a failure of the electric actuator.

## Claims

1. A linear sliding hydraulic valve (100) with emergency actuation, comprising:
• a valve body (400) including at least one inlet and at least one outlet (401, 401');
• a sliding member (6) inside the valve body (400) to allow or prevent the passage of a fluid operating in inlet and outlet (401, 401');
• a first and second primary actuators (200, 200') arranged at axially opposite sides of said valve body (400) for the actuation under standard operative conditions of said sliding member (6) in said valve body (400);
• a secondary actuator (300) for a secondary actuation of said sliding member (6) in said valve body (400),
wherein said secondary actuator (300) is interposed between said valve body (400) and said first primary actuator (200) or said secondary actuator (200'), and wherein said secondary actuator (300) comprises:
• a secondary actuator body (301);
• an axial member (8) slidably driven in said secondary actuator body (301) and interposed between the sliding member (6) and the primary actuator (200), to transmit the action exerted by said primary actuator (200) to the sliding member (6); and
• a mechanical actuation (302) configured to be accessible from the outside of the secondary actuator body (301), to translate said axial member (8) from and to an actuating position of the sliding member (6) independently of the actuation of the primary actuator (200), wherein said mechanical actuation (302) comprises a shaped movable body (303) and a motion conversion mechanism (304) to convert a motion of said shaped movable body (303) into a translational motion of the axial member (8)
• **characterized in that** the motion of said shaped movable body (303) converted by said motion conversion mechanism (304) comprises a rotational movement of said shaped movable body (303) about an axis (T) oriented according to a substantially radial direction with respect to said axial member (8) or a translational movement along said axis oriented according to a substantially radial direction with respect to said axial member (8).

2. The hydraulic valve (100) according to claim 1, wherein said motion conversion mechanism (304) is interposed between the shaped movable body (303) and the axial member (8).

3. The hydraulic valve (100) according to claim 1 or 2, wherein the axial member (8) comprises a recess (80) adapted to receive the shaped movable body (303).

4. The hydraulic valve (100) according to any one of the preceding claims, wherein shaped movable body (303) comprises:
• a cam, said motion conversion mechanism (304) being configured to convert the rotational motion of said cam into the translational motion of the axial member (8); or
• an inclined surface, said motion conversion mechanism (304) being configured to convert a translational motion of the inclined surface in a direction transversal to the axial member (8) into the translational motion of the axial member (8).

5. The hydraulic valve (100) according to claim 4, wherein said mechanical actuation (302) comprises a transversal member (9), passing through said secondary actuator body (301), and comprising an inner end (99) with respect to the secondary actuator body (301) onto which the cam (303) is mounted, and an outer end (98) with respect to the secondary actuator body (301) including a rotation control (97), adapted to put the transversal member (9), and consequently the cam (303), into rotation.

6. The hydraulic valve (100) according to claim 5, wherein the secondary actuator comprises an elastic return (11) adapted to bring the transversal member (9) and consequently the axial member (8) from an actuation position of the sliding member (6) back to a resting position.

7. The hydraulic valve (100) according to claim 5 or 6, when dependent on claim 5, wherein said transversal member (9) develops according to said axis oriented according to a substantially radial direction with respect to said axial member (8).

8. The valve (100) according to claim any one of the preceding claims, wherein said actuation comprises a magnetic or electromagnetic handling mechanism for the translation of said axial member (8).

9. The hydraulic valve (100) according to any one of the preceding claims, wherein said secondary actuator (300) comprises a mechanical restraint member (306) adapted to keep the axial member (8) towards an actuation position of the sliding member (6).

10. The hydraulic valve (100) according to claim 9, wherein the mechanical restraint member (306) comprises a hollow cylindrical body (316), inside which the transversal member (9) is positioned so that it is able to translate and rotate, and a groove (S) adapted to receive a pin (13) obtained on the transversal member (9), so that the pin (13) is able to slide and engage with the groove (S).

11. The hydraulic valve (100) according to any one of the preceding claims, wherein the primary actuator (200) comprises a primary actuator body (201), wherein the primary actuator body (201), the secondary actuator body (301), and the valve body (400) are arranged coaxially aligned.

12. The hydraulic valve (100) according to any one of the preceding claims, wherein the main actuator (200) is of an electromagnetic type.

13. The hydraulic valve (100) according to claim 12, wherein said actuator comprising a coil (2), a movable core (3) and a pusher (4).

## Patentansprüche

1. Linear verschiebbares Hydraulikventil (100) mit Notbetätigung, umfassend
* einen Ventilkörper (400), der mindestens einen Einlass und mindestens einen Auslass (401, 401') aufweist
* ein Gleitelement (6) im Inneren des Ventilkörpers (400), um den Durchgang einer Betriebsflüssigkeit am Einlass und Auslass (401, 401') zu ermöglichen oder zu verhindern;
* einen ersten und zweiten primären Aktuator (200, 200'), die auf axial gegenüberliegenden Seiten des Ventilkörpers (400) angeordnet sind, um das Gleitelement (6) des Ventilkörpers (400) unter Standardbetriebsbedingungen zu betätigen;
* einen sekundären Aktuator (300) für eine sekundäre Betätigung des Gleitelements (6) im Ventilkörper (400);
wobei der sekundäre Aktuator (300) zwischen dem Ventilkörper (400) und dem ersten primären Aktuator (200) oder dem sekundären Aktuator (200') angeordnet ist und wobei der sekundäre Aktuator (300) umfasst:
* einen sekundären Aktuatorkörper (301);
* ein axiales Element (8), das gleitend im sekundären Aktuator-Körper (301) betrieben wird und zwischen dem Gleitelement (6) und dem primären Aktuator (200) angeordnet ist, um die vom primären Aktuator (200) ausgeübte Wirkung dem Gleitelement (6) zu übertragen; und
* einen mechanischen Antrieb (302), der so konfiguriert ist, dass er im sekundären Aktuator-Körper (301) von außen zugänglich ist, um das Axialelement (8) unabhängig vom Antrieb des primären Aktuators (200) in und aus einer Betätigungsposition des Gleitelements (6) zu übertragen, wobei der mechanische Antrieb (302) einen beweglichen Profilkörper (303) und einen Bewegungsumwandlungsmechanismus (304) aufweist, zum Umwandeln einer Bewegung des beweglichen Profilkörpers (303) in eine Translationsbewegung des Axialelements (8) zu umwandeln;
* **dadurch gekennzeichnet, dass** die durch den Bewegungsumwandlungsmechanismus (304) umgewandelte Bewegung des beweglichen Profilkörpers (303) eine Drehbewegung des beweglichen Profilkörpers (303) um eine Achse (T) umfasst, die entweder gemäß einer im Wesentlichen radialen Linie in Bezug auf das Axialelement (8) ausgerichtet ist oder mit einer Translationsbewegung entlang dieser Achse, die auf der Grundlage einer im Wesentlichen radialen Richtung in Bezug auf das Axialelement (8) ausgerichtet ist.

2. Hydraulikventil (100) nach Anspruch 1, wobei der Bewegungsumwandlungsmechanismus (304) zwischen dem beweglichen Profilkörper (303) und dem Axialelement (8) zwischengeschaltet ist.

3. Hydraulikventil (100) nach Anspruch 1 oder 2, wobei das Axialelement (8) einen Hohlraum (80) aufweist, der zur Aufnahme des beweglichen Profilkörpers (303) geeignet ist.

4. Hydraulikventil (100) nach einem der vorhergehenden Ansprüche, wobei der bewegliche Profilkörper (303) umfasst
* eine Nocke, wobei der Bewegungsumwandlungsmechanismus (304) so konfiguriert ist, dass er die Drehbewegung der Nocke in die Translationsbewegung des Axialelements (8) umwandelt; oder
* eine geneigte Oberfläche, wobei der Bewegungsumwandlungsmechanismus (304) so konfiguriert ist, dass er eine Translationsbewegung der geneigten Oberfläche in einer Richtung quer zum Axialelement (8), in die Translationsbewegung des Axialelements (8) umwandelt.

5. Hydraulikventil (100) nach Anspruch 4, wobei der mechanische Antrieb (302) ein Querelement (9) umfasst, das durch den sekundären Aktuator-Körper (301) hindurchgeht und einen in Bezug auf das innere Ende (99) sekundärer Betätigungskörper (301) aufweist, an dem die Nocke (303) montiert ist, und ein äußeres Ende (98) in Bezug auf den sekundären Betätigungskörper (301), das eine Drehsteuerung (97) umfasst, die dazu bestimmt ist, das Querelement (9) und damit die Nocke (303), zu drehen.

6. Hydraulikventil (100) nach Anspruch 5, wobei der sekundäre Aktuator eine elastische Rückstellung (11) umfasst, die in der Lage ist, das Querelement (9) und folglich das Axialelement (8) aus einer Betriebsposition des Gleitelements (6), in eine Ruheposition zurückzukehren.

7. Hydraulikventil (100) nach Anspruch 5 oder 6, sofern abhängig von Anspruch 5, wobei sich das Querelement (9) entlang der Achse entwickelt, die in Bezug auf das Axialelement (8) im Wesentlichen radial ausgerichtet ist.

8. Ventil (100) nach einem der vorhergehenden Ansprüche, wobei der Antrieb einen magnetischen oder elektromagnetischen Handhabungsmechanismus zum Verlagern des Axialelements (8) umfasst.

9. Hydraulikventil (100) nach einem der vorhergehenden Ansprüche, wobei der sekundäre Aktuator (300) ein mechanisches Halteelement (306) umfasst, das das Axialelement (8) in Richtung einer Betätigungsposition des Gleitelements (6) halten kann.

10. Hydraulikventil (100) nach Anspruch 9, wobei das mechanische Halteelement (306) einen hohlzylindrischen Körper (316) umfasst, in dessen Inneren das Querelement (9) positioniert ist, wodurch es sich bewegen und drehen kann, und eine Nut (S) umfasst, die geeignet ist, einen Bolzen (13) aufzunehmen, der am Querelement (9) angebracht ist, wobei der Bolzen (13) in der Nut (S) gleiten und gekoppelt werden kann.

11. Hydraulikventil (100) nach einem der vorhergehenden Ansprüche, wobei der primäre Aktuator (200) einen primären Aktuator-Körper (201) umfasst, wobei der primäre Aktuator-Körper (201), der sekundäre Aktuator-Körper (301) und der Ventilkörper (400) koaxial ausgerichtet angeordnet sind.

12. Hydraulikventil (100) nach einem der vorherigen Ansprüche, wobei der Hauptaktuator (200) vom elektromagnetischen Typ ist.

13. Hydraulikventil (100) nach Anspruch 12, wobei der Aktuator eine Spule (2), einen beweglichen Kern (3) und ein Schubelement (4) umfasst.

## Revendications

1. Vanne hydraulique (100) à coulissement linéaire à fonctionnement d'urgence, comprenant:
* un corps de vanne (400) comprenant au moins une entrée et au moins une sortie (401, 401');
* un élément coulissant (6) à l'intérieur du corps de vanne (400) pour permettre ou empêcher le passage d'un fluide de fonctionnement à l'entrée et à la sortie (401, 401');
* un premier et un deuxième actionneur primaire (200, 200') disposés sur des côtés axialement opposés dudit corps de vanne (400) pour faire fonctionner l'élément coulissant (6) du corps de vanne (400) dans des conditions de fonctionnement standard;
* un actionneur secondaire (300) pour un actionnement secondaire de l'élément coulissant (6) dans le corps de vanne (400);
où l'actionneur secondaire (300) est interposé entre le corps de vanne (400) et le premier actionneur primaire (200) ou l'actionneur secondaire (200'), et où l'actionneur secondaire (300) comprend:
* un corps d'actionneur secondaire (301);
* un élément axial (8) actionné de manière coulissante dans le corps de l'actionneur secondaire (301) et placé entre l'élément coulissant (6) et l'actionneur primaire (200), pour transmettre l'action exercée par l'actionneur primaire (200) sur l'élément coulissant (6); et
* un entraînement mécanique (302) configuré pour être accessible de l'extérieur dans le corps d'actionneur secondaire (301) pour transférer l'élément axial (8) vers et depuis une position d'actionnement de l'élément coulissant (6), indépendamment de l'entraînement de l'actionneur primaire (200), où l'entraînement mécanique (302) comprend un corps profilé mobile (303) et un mécanisme de conversion de mouvement (304) pour convertir un mouvement du corps profilé mobile (303) en un mouvement de translation de l'élément axial (8);
* **caractérisée en ce que** le mouvement du corps profilé mobile (303) converti par le mécanisme de conversion de mouvement (304) comprend un mouvement de rotation du corps profilé mobile (303) autour d'un axe (T) orienté selon une direction sensiblement radiale par rapport à l'élément axial (8), soit un mouvement de translation le long de cet axe orienté selon une direction sensiblement radiale par rapport à l'élément axial (8).

2. Vanne hydraulique (100) selon la revendication 1, dans laquelle le mécanisme de conversion de mouvement (304) est interposé entre le corps profilé mobile (303) et l'élément axial (8) .

3. Vanne hydraulique (100) selon la revendication 1 ou 2, dans laquelle l'élément axial (8) comprend une cavité (80) adaptée pour recevoir le corps profilé mobile (303).

4. Vanne hydraulique (100) selon l'une des revendications précédentes, dans laquelle le corps profilé mobile (303) comprend
* une came, le mécanisme de conversion de mouvement (304) étant configuré pour convertir le mouvement de rotation de la came en un mouvement de translation de l'élément axial (8) ; ou
* une surface inclinée, le mécanisme de conversion de mouvement (304) étant configuré pour convertir un mouvement de translation de la surface inclinée dans une direction transversale à l'élément axial (8), en yn mouvement de translation de l'élément axial (8) .

5. Vanne hydraulique (100) selon la revendication 4, dans laquelle ledit entraînement mécanique (302) comprend un élément transversal (9), qui traverse ledit corps d'actionneur secondaire (301), et comprend une extrémité interne (99) par rapport au corps d'actionneur secondaire (301), sur lequel est montée la came (303), et une extrémité externe (98) par rapport au corps d'actionneur secondaire (301) qui comprend une commande de rotation (97), apte à faire tourner l'élément transversal (301). 9), et par conséquent la came (303).

6. Vanne hydraulique (100) selon la revendication 5, dans laquelle l'actionneur secondaire comprend un rappel élastique (11), apte à porter l'élément transversal (9), et par conséquent l'élément axial (8), revenant d'une position de fonctionnement de l'élément coulissant (6), vers une position de repos.

7. Vanne hydraulique (100) selon la revendication 5 ou 6, si dépendante de la revendication 5, dans laquelle ledit élément transversal (9) se développe selon ledit axe orienté selon une direction sensiblement radiale par rapport audit élément axial (8).

8. Vanne (100) selon l'une des revendications précédentes, dans laquelle ledit entraînement comprend un mécanisme de manutention magnétique ou électromagnétique, pour transférer ledit élément axial (8).

9. Vanne hydraulique (100) selon l'une des revendications précédentes, dans laquelle ledit actionneur secondaire (300) comprend un élément de retenue mécanique (306) apte à maintenir l'élément axial (8) vers une position d'actionnement de l'élément coulissant (6).

10. Vanne hydraulique (100) selon la revendication 9, dans laquelle l'élément de retenue mécanique (306) comprend un corps cylindrique creux (316), à l'intérieur duquel est positionné l'élément transversal (9), grâce à quoi il est mobile et rotatif, et une rainure (S) adaptée pour recevoir une goupille (13) obtenue sur l'élément transversal (9), grâce à quoi la goupille (13) est capable de coulisser et de s'accoupler dans la rainure (S).

11. Vanne hydraulique (100) selon l'une des revendications précédentes, dans laquelle l'actionneur primaire (200) comprend un corps d'actionneur primaire (201), dans lequel le corps d'actionneur primaire (201), le corps d'actionneur secondaire (301) et le corps de vanne (400) sont disposés en alignement coaxial.

12. Vanne hydraulique (100) selon l'une des revendications précédentes, dans laquelle l'actionneur principal (200) est de type électromagnétique.

13. Vanne hydraulique (100) selon la revendication 12, dans laquelle ledit actionneur comprend une bobine (2), un noyau mobile (3) et un élément de poussée (4).
